# EUROPEAN PATENT SPECIFICATION

(11) **EP 2 319 728 B1**
(45) Date of publication and mention of the grant of the patent: **05.09.2012**
(21) Application number: 10189716.3
(22) Date of filing: 02.11.2010
(51) Int. Cl.: B60P 3/38, E06C 1/34, E06C 1/36, E06C 7/50

(54) **Locking system for fixed ladder, in particular for camping vehicles**
Sperrsystem für eine befestigte Leiter, insbesondere für Campingfahrzeuge
Système de verrouillage pour échelle fixe, en particulier pour véhicules de camping

(30) Priority: 04.11.2009 IT PI20090137
(43) Date of publication of application: 11.05.2011
(73) Proprietor: ST.LA.Srl, 56025 Pontedera (PI) (IT)
(72) Inventor: Zappolini, Stefano, 56020, Montopoli (IT)
(74) Representative: Gritschneder, Martin

(56) References cited:
- FR-A1- 2 610 362
- GB-A- 610 261
- GB-A- 945 113
- NL-C2- 1 026 402

## Description

### Technical Field

The present invention concerns a locking system for fixed ladders for firmly bound the ladder to its support surface.

### Background Art

Fixed ladder are structures made of two vertical members and a set of rungs or steps, and they could be composed of one or more lengths but they have the main feature of not being self-supporting, that is they need to be leaned against a vertical surface. This kind of rigid ladder is very widespread as it has a simple structure and little overall dimensions. In particular, due to the little dimensions they have in a plant view, rigid ladders are commonly used since ever as an accessory of bunk beds or in camping vehicles, such as campers or caravans.

Nevertheless, rigid ladders have very little stability and that is an important limit in the above cited fields of use as, about bunk beds the ladder is used mainly by children and safety requirements are fundamental, while in camping vehicles there is the further trick that they have to be used in a room subject to vibrations, accelerations and other causes of instability.

A solution which is commonly adopted to give the ladder a greater stability consists of providing the top ends of the ladder with hook shaped protuberances, so that the ladder can be bound to a top edge of a vertical surface. As it can be easily understood, though this solution improve the stability of the ladder, it do not completely impede the movement of the ladder since, as a consequence of hits, vibrations, or vertical forces in general applied to the ladder, the hook shaped end of the ladder can slip out of their housing with the ladder that falls down. In addiction, the use of hook shaped requires a top edge of the vertical support surface thin enough to be caught by the hook.

Due to the above limits of the background art, which are particularly relevant in case of bunk beds or camping vehicles, it is strongly felt the need of looking for solution for making rigid ladders much more stable.

### Summary of invention

It is object of the present invention to propose a locking system for rigid ladders having hook shaped top ends, for preventing fortuitous slipping out of the hook shaped and from its housing.

It is further object of the present invention to propose a locking system for rigid ladders having hook shaped top ends apt to allow to safely lean the ladder to any vertical surface.

It is another object of the present invention to propose a simple and safe locking system for rigid ladders that also have very low production costs.

The above objects are attained by a locking system for fixing ladders, in particular in camping vehicles, comprising a ladder providing at least a hook member at a top end, at least one restraining block for restraining said hook member, said restraining block being stably connectable to a surface where the ladder is to be leaned against and providing a cavity with at least a top opening for inserting said hook member; and at least one locking cam pivotably bound to said ladder in correspondence to said hook member at a predefined distance from said hook member, the minimum dimension of said locking cam being such to allow disengaging said hook member from said cavity, the maximum dimension of said locking cam being such to prevent disengaging of said hook member from said cavity, said locking cam comprising at least one thin main body with axis of rotation placed in an intermediate position between the longitudinal ends of said main body.

By acting on the angular position of the locking cam it is possible to fasten the hook shaped protuberance in its housing so preventing it from accidentally slipping out until the cam is rotated from the locking position.

Advantageously, a longitudinal end of said cam provides a locking wall, the opposite longitudinal end providing handling means.

Still advantageously the restraining block is bound to said surface by screw means.

The locking cam is pivotably bound to said ladder by either screw means or rivets.

In addiction the locking cam can be provided with a first protruding portion apt to press against said ladder in specific angular positions of said locking cam in order cam in order to create friction forces defining steady angular positions of said locking cam and/or with a second protruding portion apt to define surfaces facing specific surfaces of the ladder in order to define angular end stroke positions of said locking cam.

It is clear that the locking system of the present invention is very simple and reliable and it makes rigid ladders very safe without complicating too much their structure and then without increasing their production costs. In addiction, the presence of restraining blocks allow to lean ladders with hook shaped top protuberances to any wall.

### Brief description of drawings

These and more characteristics of the present invention will be more easily comprehensible thanks to the following description of a preferred embodiment, given as a non limiting example, with reference to the accompanying drawings in which:
- Figure 1 shows a perspective view of a bunk bed with a ladder provided with locking system according to the invention;
- Figure 2 is detailed view of fig. 1 showing the locking system for fastening the ladder to the bed supporting structure;
- Figure 3 shows a side view of the locking system of the invention a ladder locking state;
- Figure 4 shows a view similar to fig. 3 with the locking system in the ladder unlocked state;
- Figures 5 to 8 show front, side, back and perspective views of a locking cam of a locking system according to the invention;
- Figures 9 to 11 show a front view, a section view made along line X-X of fig. 9, and a top view, of a restraining block of the locking system of the present invention.

### Description of preferred embodiments

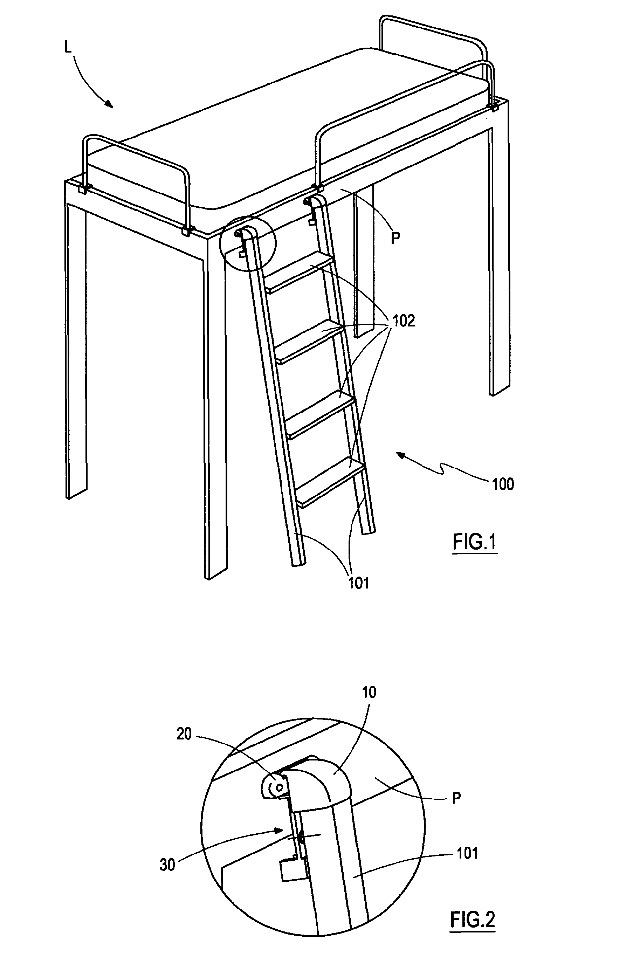

In fig. 1 it is visible a bunk bed, L, which has leaned, at a vertical wall, P, a rigid ladder, 100, comprising two vertical members, 101, four steps, 102, and, at the top end of each vertical member, a locking system according to the invention.

In the detailed view of fig. 2 it can be seen one of the two areas where the ladder touch the vertical wall P. At the top end of the ladder there is a hook shaped member, 10, whose downward directed free end is housed in a restraining block, 20, bound to the wall P. Under the hook member 10, on the side facing the vertical wall P which is also the side where protrudes the free end of the hook member 10, is provided a locking cam, 30, pivotably bound to the ladder for rotating around an axis, 31. The locking cam 30, which is shown in the lock position in figures 1 and 2, is shaped so that the hook member 10 can be disengaged from the restraining block 20 only when it is rotated around the pivot axis 31 at specific angular positions.

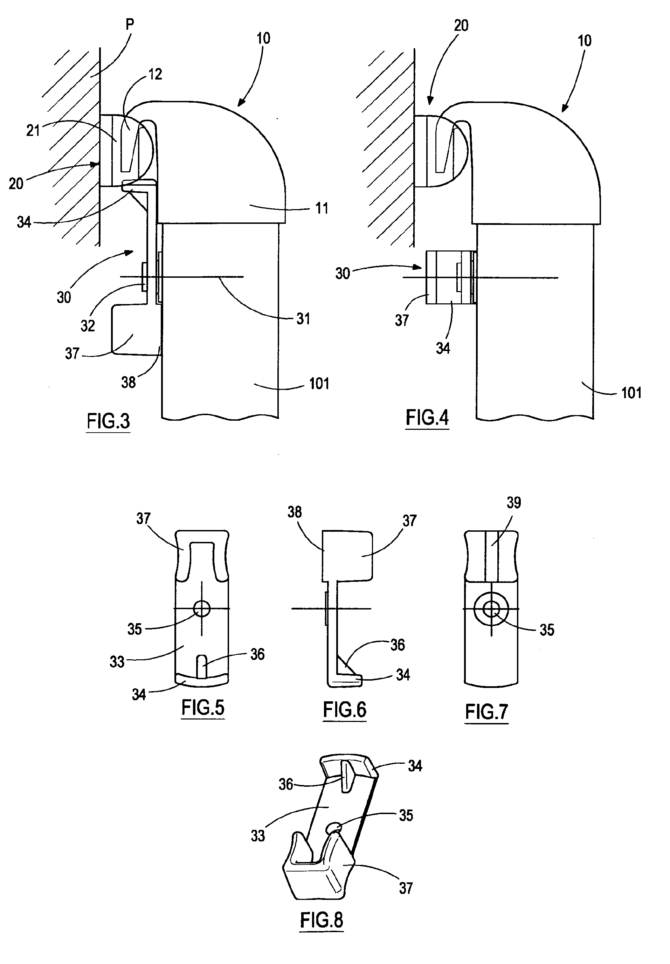

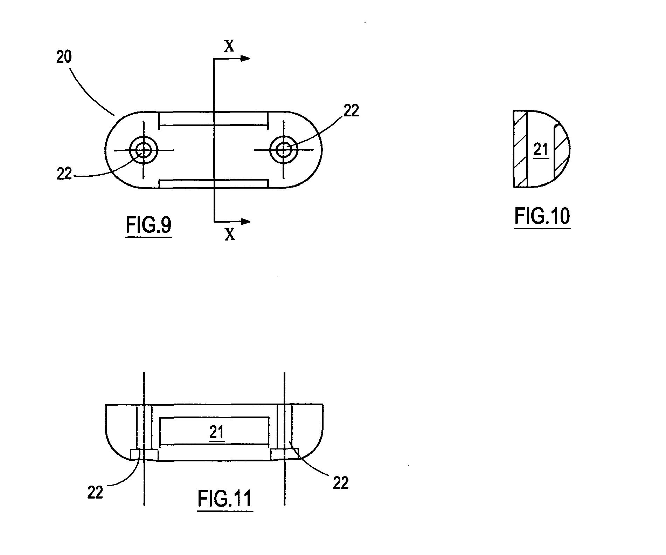

In figures 3 and 4 the top end of the vertical member 101 is shown in side view with the locking system of the present invention arranged in lock position and in release position respectively. The hook member 10 is formed by a portion 11 adapted to be firmly coupled to the vertical member 101 and a downward directed free end, 12, which together form a hook shape. The downward directed free end 12 is adapted to enter a cavity, 21, of the restraining block 20. A restraining block according to the present invention is shown in figures 9 to 11 in front, section and top view respectively. In a center portion of the restraining block 20 there is a through slot 21, whose size is adapted to receive the free end 12 of the hook member 10. At both sides of the slot 21 (which could also be a blind cavity) there are through holes, 22, which are used for fastening the restraining block to the vertical wall P by screw means.

The locking cam 30, is pivotably bound to the vertical member 101 by means of a rivet, 32, determining the locking cam pivot axis 31. The shape of the locking cam 30 can be clearly seen in figures 5 to 8. A main body, 33, of the locking cam is a thin component having a substantially rectangular shape. At a longitudinal end of the main body there is a locking wall, 34, having a curvilinear outline whose bending radius has its center in the center of a hole, 35, which houses the rivet 32, that is on the pivot axis 31. The internal side of the locking wall 34 is also provided with a stiffening member, 36. Opposite with regard to said locking wall, the main body 33 is provided with handling means, 37, formed by a portion of the main body which has a greater thickness and which is properly shaped so that it can be grasped with two fingers. In correspondence with the handling means 37, but extending on the opposite side of the main body 33 there is a protruding section, 38, with a little groove, 39, in the center, which, so, while the locking cam is being rotated in the locking position the protruding section at a certain rotation angle starts rubbing against the vertical member 101 until the groove 39 is vertically aligned with the vertical member, 101 and this is then a firm angular position of the locking cam.

In fig. 3 the locking cam 30 is in the locking position since the maximum dimension of the locking cam is longitudinally aligned with the vertical member 101 and the locking wall 34 is in its closest position to the restraining block 20. In this embodiment the distance between pivot axis 31 and the end of the locking wall 34 and the distance between the pivot axis 31 and the free end 12 of the hook member are designed so that in the locking position the gap between the locking wall 34 and the free end 12 of the hooking member is very small and the locking wall is then very close to the restraining block 20, so completely preventing the vertical slide of the ladder. Anyway, for the locking action being effective, it is sufficient that, in the locking position, the above gap between the locking wall 34 and the free end 12 of the hooking member is lower than the depth of the cavity 21.

In fig. 4 the locking cam is in the release position, rotated of 90° with regard to the locking position. In the release position the distance between the locking cam 30 and the free end 12 of the hook member is at its maximum amount, that is the minimum dimension of the locking cam is aligned with the vertical member 101, so that the free end 12 can be disengaged from the restraining block 20 by lifting the ladder 100. The passage from the locking position to the release position and vice-versa, takes place in a very simple way by grasping the handling means 37 of the locking cam 30 and rotating the locking cam of 90°.

It is clear that the advantages of the above described locking system for rigid ladders remain safe even if modifications or different embodiment are carried out.

The locking cam 30 may have a different shape with respect to the substantially rectangular shape shown in figures and described as an embodiment example. One edge of the locking cam could be provided with a protruding portion extending towards the vertical member 101, said protruding action being for abutting the vertical member and so defining a limit for the rotation movement of the locking cam. The rotation movement of the cam about the pivot axis 31 could be obtained by different means with respect to the disclosed handling means 37. For instance, transmission means could be provided for transmitting the sliding movement of a lever and converting it in the rotation movement of the locking cam. Also the restraining block 20 could have a different shape. The cavity 21 could be a blind cavity closed at the bottom and/or it could lack one or both the side portions where, in the represented embodiment, are provided the fastening holes 21 and 22. The fastening means could be different in number, arrangement, and type. The hook member 10, that in the represent embodiment is substantially a plug covering the end of the vertical member 101, could also be integral to the vertical member. The hook member 10 could also extend downwards along the vertical member 101 and it could also provide a hole or other means for pivotably binding the locking cam 30 to it instead of to the vertical member 101.

These and other changes or modifications could be carried out to the locking system for rigid ladders of the present invention, still remaining within the ambit of protection defined by the following claims.

## Claims

1. Locking system for fixing a ladder, in particular for camping vehicles,
wherein comprises:
- a ladder providing at least a hook member (10) at a top end;
- at least one restraining block (20) for restraining said hook member (10), said restraining block (20) being stably connectable to a surface (P) where the ladder is to be leaned against and providing a cavity (21) with at least a top opening for inserting said hook member (10); and
- at least one locking cam (30) pivotably bound to said ladder in correspondence to said hook member (10) at a predefined distance from said hook member, the minimum dimension of said locking cam (30) being such to allow disengaging said hook member (10) from said cavity (21), the maximum dimension of said locking cam (30) being such to prevent disengaging of said hook member (10) from said cavity (21), **characterized in that** said locking cam (30) comprising at least one thin main body (33) with axis of rotation (31) placed in an intermediate position between the longitudinal ends of said main body (33).

2. Locking system for fixed rigid ladder according to claim 1 **characterized in that** a longitudinal end of said cam (30) provides a locking wall (34), the opposite longitudinal end providing handling means (37).

3. Locking system according to claim 1 or 2 **characterized in that** said restraining block (20) is bound to said surface (P) by screw means.

4. Locking system according to any preceding claim **characterized in that** said locking cam (30) is pivotably bound to said ladder by either screw means or rivets (32).

5. Locking system according to any preceding claim **characterized in that** said locking cam (30) is provided with a first protruding portion (38) apt to press against said ladder in specific angular positions of said locking cam (30) in order to create friction forces defining steady angular positions of said locking cam (30).

6. Locking system according to any preceding claim **characterised in that** said locking cam (30) is provided with a second protruding portion apt to define surfaces facing specific surfaces of the ladder in order to define angular end stroke positions of said locking cam (30).

7. Locking system according to one of claims 1 to 6 **characterized in that** the ladder is a fixed rigid ladder (100) of the type comprising hook members (10) on top.

## Patentansprüche

1. Sperrsystem zum Befestigen einer Leiter, insbesondere für Campingfahrzeuge, wobei es umfasst:
- eine Leiter, bei der mindestens ein Hakenelement (10) an einem oberen Ende vorgesehen ist;
- mindestens einen Rünkhalteblock (20), um das Hakenelement (10) zurückzuhalten, wobei der Rückhalteblock (20), dort wo die Leiter angelehnt werden soll, stabil mit einer Oberfläche (P) verbindbar ist und einen Hohlraum (21) mit mindestens einer oberen Öffnung zum Einsetzen des Hakenelements (10) zur Verfügung stellt; und
- mindestens einen Sperrnocken (30), der in einem vorbestimmten Abstand von dem Hakenelement in Entsprechung mit dem Hakenelement (10) verschwenkbar an der Leiter angebracht ist, wobei die minimale Abmessung des Sperrnockens (30) so beschaffen ist, dass ein Ausrücken des Hakenelements (10) aus dem Hohlraum (21) ermöglicht wird, wobei die maximale Abmessung des Sperrnockens (30) so beschaffen ist, dass ein Ausrücken des Hakenelements (10) aus dem Hohlraum (21) verhindert wird, **dadurch gekennzeichnet, dass** der Sperrnocken (30) mindestens einen dünnen Hauptkörper (33) umfasst, dessen Drehachse (31) in einer Zwischenposition zwischen den Längsenden des Hauptkörpers (33) angeordnet ist.

2. Sperrsystem für eine befestigte starre Leiter nach Anspruch 1, **dadurch gekennzeichnet, dass** ein Längsende des Nockens (30) mit einer Sperrwand (34) versehen ist, wobei das entgegengesetzte Längsende mit einer Handhabungseinrichtung (37) versehen ist.

3. Sperrsystem nach Anspruch 1 oder 2, **dadurch gekennzeichnet, dass** der Rückhalteblock (20) mittels Schraubeneinrichtungen an der Oberfläche (P) angebracht ist.

4. Sperrsystem nach einem vorangehenden Anspruch, **dadurch gekennzeichnet, dass** der Sperrnocken (30) mittels entweder Schraubeneinrichtungen oder Nicte (32) verschwenkbar an der Leiter angebracht ist.

5. Sperrsystem nach einem vorangehenden Anspruch, **dadurch gekennzeichnet, dass** der Sperrnocken (30) mit einem ersten vorstehenden Teil (38) versehen ist, der dazu geeignet ist, in bestimmten Winkellagen des Sperrnockens (30) gegen die Leiter zu pressen, um Reibungskräfte zu erzeugen, die Winkelruhelagen des Sperrnockens (30) festlegen.

6. Sperrsystem nach einem vorangehenden Anspruch, **dadurch gekennzeichnet, dass** der Sperrnocken (30) mit einem zweiten vorstehenden Teil versehen ist, der dazu geeignet ist, Oberflächen festzulegen, die bestimmten Oberflächen der Leiter gegenüberliegen, um Winkelendanschlagslagen des Sperrnockens (30) festzulegen.

7. Sperrsystem nach einem der Ansprüche 1 bis G, **dadurch gekennzeichnet, dass** die Leiter eine befestigte starre Leiter (100) von dem Typ ist, der oben Hakenelemente (10) umfasst.

## Revendications

1. Système de verrouillage pour fixer une échelle, en particulier pour des véhicules de camping, comprenant :
- une échelle fournissant au moins un élément de crochet (10) à une extrémité supérieure ;
- au moins un bloc de retenue (20) pour retenir ledit élément de crochet (10), ledit bloc de retenue (20) pouvant être connecté de manière stable à une surface (P) contre laquelle l'échelle est destinée à être posée et fournissant une cavité (21) comportant au moins une ouverture supérieure pour insérer ledit élément de crochet (10) ; et
- au moins une came de verrouillage (30) fixée avec faculté de pivotement à ladite échelle en correspondance avec ledit élément de crochet (10) à une distance prédéfinie dudit élément de crochet, la dimension minimum de ladite came de verrouillage (30) étant prévue pour permettre le désengagement dudit élément de crochet (10) d'avec ladite cavité (21), la dimension maximum de ladite came de verrouillage (30) étant prévue pour empêcher le désengagement dudit élément de crochet (10) d'avec ladite cavité (21), **caractérisé en ce que** ladite came de verrouillage (30) comprend au moins un corps principal mince (33) ayant un axe de rotation (31) placé à une position intermédiaire entre les extrémités longitudinales dudit corps principal (33).

2. Système de verrouillage pour fixer une échelle rigide selon la revendication 1, **caractérisé en ce qu'**une extrémité longitudinale de ladite came (30) fournit une paroi de verrouillage (34), l'extrémité longitudinale opposée fournissant des moyens de manutention (37).

3. Système de verrouillage selon la revendication 1 ou 2, **caractérisé en ce que** ledit bloc de retenue (20) est fixé à ladite surface (P) par des moyens de vis.

4. Système de verrouillage selon l'une quelconque des revendications précédentes, **caractérisé en ce que** ladite came de verrouillage (30) est fixée avec faculté de pivotement à ladite échelle par des moyens de vis ou par des rivets (32).

5. Système de verrouillage selon l'une quelconque des revendications précédentes, **caractérisé en ce que** ladite came de verrouillage (30) est dotée d'une première partie saillante (38) pouvant presser contre ladite échelle à des positions angulaires spécifiques de ladite came de verrouillage (30) afin de créer des forces de friction définissant des positions angulaires régulières de ladite came de verrouillage (30).

6. Système de verrouillage selon l'une quelconque des revendications précédentes, **caractérisé en ce que** ladite came de verrouillage (30) est dotée d'un seconde partie saillante pouvant définir des surfaces faisant face à des surfaces spécifiques de l'échelle afin de définir des positions de fin de course angulaires de ladite came de verrouillage (30).

7. Système de verrouillage selon l'une quelconque des revendications 1 à 6, **caractérisé en ce que** l'échelle est une échelle rigide fixe (100) du type comprenant des éléments de crochet (10) dans sa partie supérieure.
